# EUROPÄISCHE PATENTSCHRIFT

(11) **EP 3 803 169 B1**
(45) Veröffentlichungstag und Bekanntmachung des Hinweises auf die Patenterteilung: **17.04.2024**
(21) Anmeldenummer: 19728414.4
(22) Anmeldetag: 03.06.2019
(51) Int. Cl.: F16K 11/07, F16K 27/04

(54) **VERFAHREN ZUR FERTIGUNG EINES GRUNDKÖRPERS EINES VENTILGEHÄUSES FÜR EIN HYDRAULISCHES STEUERVENTIL SOWIE VENTILGEHÄUSE MIT DEM GRUNDKÖRPER**
METHOD FOR MANUFACTURING A MAIN BODY OF A VALVE HOUSING FOR A HYDRAULIC CONTROL VALVE, AND VALVE HOUSING HAVING THE MAIN BODY
PROCÉDÉ POUR LA FABRICATION D'UN CORPS DE BASE D'UN BOÎTIER DE SOUPAPE POUR UNE SOUPAPE DE COMMANDE HYDRAULIQUE AINSI QUE BOÎTIER DE SOUPAPE COMPRENANT LE CORPS DE BASE

(30) Priorität: 05.06.2018 DE 102018208812
(43) Veröffentlichungstag der Anmeldung: 14.04.2021
(73) Patentinhaber: ZF Friedrichshafen AG, 88046 Friedrichshafen (DE)
(72) Erfinder: MAURER, Patrick, 66265 Heusweiler (DE); SCHOLL, Herbert, 66822 Lebach-Steinbach (DE)
(86) Internationale Anmeldenummer: PCT/EP2019/064289
(87) Internationale Veröffentlichungsnummer: WO 2019/233925

(56) Entgegenhaltungen:
- GB-A- 829 785
- US-A- 5 235 746
- US-B1- 6 349 743

## Beschreibung

Die Erfindung betrifft ein Verfahren zur Fertigung eines Grundkörpers eines Ventilgehäuses für ein hydraulisches Steuerventil mit den Merkmalen des Anspruchs 1. Die Erfindung betrifft des Weiteren ein Ventilgehäuse mit dem Grundkörper.

Ventilgehäuse für hydraulische Steuergerätventile weisen oftmals eine Mehrzahl von Steuerkolben auf, wobei jeder der Steuerkolben eine gewisse Anzahl von Ventiltaschen durchdringt und in Abhängigkeit der axialen Position des Steuerkolbens fluidtechnische Verbindungen öffnen und schließen kann. Die Ventilgehäuse sind oftmals als Druckgussgehäuse ausgebildet und somit insbesondere in der Großserienfertigung kostengünstig herstellbar. Allerdings müssen die Funktionsflächen zwischen den Steuerkolben und dem eigentlichen Ventilgehäuse mit einer Fertigungsgenauigkeit hergestellt werden, die über ein Druckgussverfahren nicht erreicht werden kann. Somit erfordern die Funktionsflächen regelmäßig eine Nachbearbeitung oder eine Endbearbeitung.

Die US 5 235 746 A beschreibt eine Servoventilbaugruppe, umfassend einen beispielsweise aus Werkzeugstahl hergestellten Ventilblock mit einer rechten und einer linken Übergangsplatte. Der Ventilblock kann gegossen sein. Eine Ventilspule gleitet in einen Durchgang, wobei der Durchgang der Länge durch den Ventilblock gebohrt ist. Weiterhin wird eine Reihe von Führungslöchern durch den Ventilblockrohling von einer Längsseite zur anderen Längsseite gebohrt. Diese Führungslöcher werden seitlich entlang des Rohlings an einer geeigneten Stelle innerhalb der Umrisse von herzustellenden Querschlitzen an jeder der gewünschten Querschlitzpositionen positioniert.

Der Ventilblockrohling wird dann wärmebehandelt und gehärtet. Im nächsten Schritt wird durch jedes der Führungslöcher eine Drahtelektrode geführt, um die Querschlitze mittels elektronischer Drahterodierung in den Ventilkörper zu schneiden.

Die DE 10 2015 223 952 A1, die wohl den nächstkommenden Stand der Technik bildet, beschreibt ein Schaltventil zum Schalten von Kühl- und Schmiermittelkreisläufen, welches z. B. für das Ansteuern der Schmier- und Kühlmittelkreisläufe von Teilgetrieben eines Doppelkupplungsgetriebes mit Kühl- und/oder Schmiermittel eingesetzt wird. Dieses vorbekannte Schaltventil weist ein Ventilgehäuse mit einem als Sacklochbohrung ausgebildeten Ventilkolbenraum, in dem axialbeweglich ein Ventilkolben gelagert ist, auf. Die Anschlüsse sind in Form von Ventiltaschen ausgebildet, die sich quer zum Ventilkolbenraum bzw. zur Sacklockbohrung erstrecken. Die Seitenflächen der Ventiltaschen sind als Schrägflächen, die bei der gießenden Herstellung des Ventilgehäuses als Entformungsschrägen fungieren, ausgebildet. Die umlaufenden Kanten zwischen dem Ventilkolbenraum bzw. der Sacklochbohrung und den Seitenflächen der Ventiltaschen dienen als Steuerkanten und müssen somit präzise bearbeitet sein. Die Herstellung des Ventilgehäuses aus dem Stand der Technik ist daher aufwendig und umfasst viele Bearbeitungsschritte.

Mit der Erfindung soll ein Verfahren bereit gestellt werden, welches, insbesondere auch in der Großserienfertigung, die einfache Herstellung eines Ventilgehäuses betreffender Art ermöglicht.

Dies gelingt mit dem erfindungsgemäßen Verfahren mit den Merkmalen des Patentanspruchs 1. Mit nebengeordneten Patentansprüchen erstreckt sich die Erfindung auch auf ein Ventilgehäuse mit den Merkmalen des Anspruchs 10. Bevorzugte Weiterbildungen und Ausgestaltungen der Erfindung ergeben sich aus den abhängigen Patentansprüchen, der nachfolgenden Erfindungsbeschreibung und den Zeichnungen.

Gegenstand der Erfindung ist somit ein Verfahren zur Fertigung eines Grundkörpers eines Ventilgehäuses für ein hydraulisches Steuerventil. Insbesondere ist das Steuerventil für ein Schaltgerät eines Automatikgetriebes, insbesondere eines PKW-Automatikgetriebes, geeignet und/oder ausgebildet. Alternativ oder ergänzend ist das hydraulische Steuerventil zum Schalten von Kühl- und/oder Schmiermittelkreisläufen vorgesehen. Beispielsweise kann durch das hydraulische Steuerventil das Ansteuern der Kühl- und/oder Schmiermittelkreisläufe von Teilgetrieben eines Doppelkupplungsgetriebes mit Kühl- und/oder Schmieröl erfolgen.

Der insbesondere bearbeitete Grundkörper weist eine Kopplungsseite, insbesondere ausgebildet als eine Flanschseite, zur Kopplung mit einem Deckel und/oder einer Kanalplatte, auf. Die Kopplungsseite ist vorzugsweise plan ausgebildet. Bei alternativen Ausgestaltungen kann diese auch 3-D-strukturiert und/oder konturiert sein.

Von der Kopplungsseite ist eine Mehrzahl von Ventiltaschen in den Grundkörper eingebracht, wobei die Ventiltaschen als Anschlüsse ausgebildet sein können. Insbesondere ergänzen sich die Ventiltaschen mit der Kanalplatte zu einem hydraulischen Führungs- und/oder Verteilungssystem. Die Ventiltaschen sind zumindest teilweise durch Stegabschnitte, welche einen Teil des Grundkörpers bilden, voneinander getrennt. Teilweise sind die Ventiltaschen durch Stegabschnitte abgeschlossen oder begrenzt, welche Randabschnitte bilden.

In dem insbesondere bearbeiteten Grundkörper ist mindestens ein Ventilkolbenraum für einen Ventilkolben eingebracht. Vorzugsweise weist der Grundkörper mehrere Ventilkolbenräume sowie darin angeordnete Ventilkolben auf. Der Ventilkolbenraum und/oder der Ventilkolben definiert eine Längsache und/oder Kolbenrichtung. Der Ventilkolben ist in dem Ventilkolbenraum axial verschiebbar in Bezug auf die Längsachse und/oder Kolbenrichtung angeordnet. Die Ventiltaschen erstrecken sich quer, vorzugsweise senkrecht zum Ventilkolbenraum bzw. zur einer entsprechenden Durchgangsöffnung bzw. Bohrung.

Der Ventilkolbenraum durchstößt mindestens einen Stegabschnitt, so dass eine Stegausgangsöffnung in dem Stegabschnitt gebildet ist. Die Stegausgangsöffnung mündet in einer der Ventiltaschen. Die Ventiltasche mit der Stegausgangsöffnung wird nachfolgend auch als Bearbeitungsventiltasche bezeichnet.

Die Stegausgangsöffnung ist vorzugsweise kreisrund ausgebildet. Die Stegausgangsöffnung ist umlaufend durch eine Steuerkante begrenzt, wobei die Steuerkante durch einen Kolbenführungsabschnitt und einen Stirnseitenabschnitt gebildet ist. Bei dem Stirnseitenabschnitt handelt es sich um einen axialen Stirnseitenabschnitt. Der Kolbenführungsabschnitt ist beispielsweise als ein Hohlzylinderabschnitt in dem Stegabschnitt als Teil des Ventilkolbenraums ausgebildet. Alternativ kann der Kolbenführungsabschnitt auch als ein Konusabschnitt, Trichterabschnitt etc. ausgebildet sein. Die Steuerkante wird insbesondere durch den Übergang von dem Stirnseitenabschnitt zu dem Kolbenführungsabschnitt gebildet.

Bei der Bearbeitung wird in einen Rohgrundkörper für den Grundkörper der Stirnseitenabschnitt der Steuerkante durch ein trennendes Verfahren gefertigt, insbesondere eingebracht. Dieser Bearbeitungsschritt wird als Stirnseitenbearbeitungsschritt bezeichnet.

Bei dem trennenden Verfahren wird erfindungsgemäß das Trennwerkzeug von der Kopplungsseite durch die Bearbeitungsventiltasche zu dem Stirnseitenabschnitt der Steuerkante geführt. Es erfolgt somit eine Bearbeitung des Stirnseitenabschnitts mit dem Trennwerkzeug durch die Bearbeitungsventiltasche hindurch, wobei das Trennwerkzeug durch eine Öffnung eingeführt wird, welche in die Kopplungsseite eingebracht ist. Alternativ oder ergänzend wird vorgeschlagen, dass ein Zwischenwinkel zwischen der Kolbenrichtung und/oder Längsachse und dem Trennwerkzeug größer als 45°, insbesondere größer als 75° ausgebildet ist.

Es ist dabei eine Überlegung der Erfindung, dass durch das erfindungsgemäße Verfahren auch sehr kleine Durchmesser für den Ventilkolbenraum genutzt werden können, da die Bohrung für den Ventilkolbenraum nicht für die Zugänglichkeit mit dem Trennwerkzeug ausgelegt sein muss. Vielmehr wird von einer anderen Richtung die Bearbeitung des Stirnseitenabschnitts umgesetzt. Nachdem die Ventiltaschen die Zugänglichkeit des Trennwerkzeugs ermöglichen müssen, sind diese zugleich besser nutzbar beim Waschen des gefertigten Grundkörpers und/oder bei der meßtechnischen Überprüfung des Stirnseitenabschnitts.

Das trennende Verfahren für den Stirnseitenbearbeitungsschritt ist als ein Fräsverfahren ausgebildet, wobei ein Fräswerkzeug, insbesondere ein Fräser, als Trennwerkzeug von der Kopplungsseite durch die Bearbeitungsventiltasche zu dem Stirnseitenabschnitt der Steuerkante, insbesondere zu einem Bearbeitungsort für den Stirnseitenabschnitt der Steuerkante, geführt wird. Durch ein Abfräsen des Stirnseitenabschnitts bzw. eines Rohstirnseitenabschnitts zur Fertigung des Stirnseitenabschnitts kann in einem Bearbeitungsschritt eine sehr hohe Fertigungsqualität erzielt werden.

Bei einer weiteren bevorzugten Ausgestaltung der Erfindung ist das trennende Verfahren für den Stirnseitenbearbeitungsschritt als ein Lasertrennverfahren ausgebildet, wobei ein Laserstrahl als Trennwerkzeug von der Kopplungsseite durch die Bearbeitungsventiltasche zu dem Stirnseitenabschnitt der Steuerkante, insbesondere zu einem Bearbeitungsort für den Stirnseitenabschnitt der Steuerkante, geführt wird. Durch eine Laserbearbeitung des Stirnseitenabschnitts bzw. eines Rohstirnseitenabschnitts zur Fertigung des Stirnseitenabschnitts kann in einem Bearbeitungsschritt eine sehr schnelle Fertigung umgesetzt werden.

Bei einer möglichen Weiterbildung der Erfindung weist das Verfahren eine Verfahrensfolge auf, wobei eine Vorbearbeitung durch das Fräsverfahren und eine Endbearbeitung oder Nachbearbeitung durch das Lasertrennverfahren oder in umgekehrter Reihenfolge umgesetzt wird. Bei der Verfahrensfolge können die spezifischen Vorteile der beiden Trennverfahren besser ausgenutzt werden. So ist es beispielsweise möglich, Material schnell durch das Lasertrennverfahren abzutragen und nachfolgend die Oberfläche des Stirnseitenabschnitts durch eine Fräsnachbearbeitung hinsichtlich der Planheit und/oder Rauhigkeit zu verbessern.

Bei einer bevorzugten Umsetzung des Verfahrens weist der Rohgrundkörper in der Bearbeitungsventiltasche einen Stegwandbereich auf. Der Stegwandbereich erstreckt sich insbesondere von einem Boden der Bearbeitungsventiltasche bis zu der Oberseite der Bearbeitungsventiltasche und/oder Kopplungsseite des Grundkörpers. Der Stegwandbereich weist einen Rohstirnseitenabschnitt und einen Stegwandrestabschnitt auf. Aus dem Rohstirnseitenabschnitt wird in dem Stirnseitenbearbeitungsschritt der Stirnseitenabschnitt gefertigt. Es ist vorgesehen, dass der Rohstirnseitenabschnitt in axialer Richtung in Bezug auf die Kolbenrichtung und/oder Längsachse des Steuerkolbens über den Stegwandrestabschnitt übersteht. In dieser Umsetzung muss bei der Fertigung des Stirnseitenabschnitts nur Material im Bereich des Rohstirnseitenabschnitts abgetragen werden, der Stegwandrestabschnitt kann unbearbeitet verbleiben. Somit wird Fertigungsaufwand eingespart. Vorzugsweise ist der Übergang von dem Rohstirnseitenabschnitt zu dem Stegwandrestabschnitt als eine Kante ausgebildet.

Bei einer besonders bevorzugten Ausgestaltung der Erfindung ist der Rohgrundkörper durch ein Urformverfahren gebildet. Insbesondere ist der Rohgrundkörper durch ein Gussverfahren, insbesondere Druckgussverfahren hergestellt. Besonders bevorzugt ist der Rohgrundkörper als ein Aluminiumdruckgusskörper ausgebildet. In dieser Ausgestaltung können in den Rohgrundkörper bereits die Ventiltaschen mit den Rohstirnseitenabschnitten eingeformt werden. Ferner kann bereits das Volumen für den Ventilkolbenraum vorgeformt oder eingeformt werden. Insbesondere sind in dem Rohgrundkörper die Ventiltaschen im Wesentlichen fertig ausgeformt und der Ventilkolbenraum vorgeformt, insbesondere mittels Schieber. Es ist bevorzugt, dass der Rohstirnseitenabschnitt als ein Entformungsschrägabschnitt ausgebildet ist, um eine Entformung des Rohgrundkörpers aus dem Gusswerkzeug zu ermöglichen.

Besonders bevorzugt ist der Stirnseitenabschnitt in einer Radialebene zu der Kolbenrichtung und/oder Längsachse gelegen. Damit ist sichergestellt, dass bei dem Übergang von dem Ventilkolben zu der Steuerkante umlaufend die gleichen Dichtverhältnisse gegeben sind.

Ein weiterer Gegenstand betrifft ein Ventilgehäuse, insbesondere wie dies zuvor beschrieben wurde, mit einem Grundkörper, insbesondere wie diese zuvor beschrieben wurde. Optional weist das Ventilgehäuse den Ventilkolben auf, wobei der Ventilkolben in dem Ventilkolbenraum angeordnet ist. Der Stirnseitenabschnitt oder die Stirnseitenabschnitte sind durch das Verfahren, wie dies zuvor beschrieben wurde bzw. nach einem der vorhergehenden Ansprüche gefertigt. Dies ist bei dem fertigen Produkt, insbesondere bei dem fertig bearbeiteten Grundkörper durch charakteristische Bearbeitungsspuren von dem trennenden Verfahren, insbesondere von der Fräsbearbeitung oder der Lasermaterialbearbeitung, nachweisbar.

Es kann vorgesehen sein, dass der Stirnseitenabschnitt sich auf eine Kreisringfläche mit einer einfachen Ringbreite von weniger als 3 mm, vorzugsweise weniger als 1 mm und/oder mehr als 0,5 mm erstreckt oder diese Fläche zumindest umfasst. Alternativ hierzu erstreckt sich der Stirnseitenabschnitt über eine Halbrundform, welche in Richtung des Bodens der Bearbeitungsventiltasche verlängert ist.

Eine bevorzugte Ausführungsform der Erfindung wird nachfolgend anhand der Zeichnung näher erläutert. Die in den Figuren der Zeichnung gezeigten und/oder nachfolgend erläuterten Merkmale können, auch unabhängig von bestimmten Merkmalskombinationen, allgemeine Merkmale der Erfindung sein und die Erfindung entsprechend weiterbilden.
Fig. 1 zeigt in einer Schnittdarstellung ein mit dem erfindungsgemäßen Verfahren hergestelltes Ventilgehäuse.
Fig. 2 zeigt in einer Draufsicht einen Ausschnitt des Ventilgehäuses der Fig. 1.
Fig. 3 zeigt in einer dreidimensionalen Darstellung eine Bearbeitungsventiltasche von einem Rohkörper für einen Grundkörper des Ventilgehäuses der Figuren 1 und 2.
Figur 4 zeigt die Bearbeitungsventiltasche bei einer Fräsbearbeitung.
Figur 5 zeigt die Bearbeitungsventiltasche nach der Bearbeitung.
Figur 6 zeigt die Bearbeitungsventiltasche der Figur 3 bei einer Lasermaterialbearbeitung.

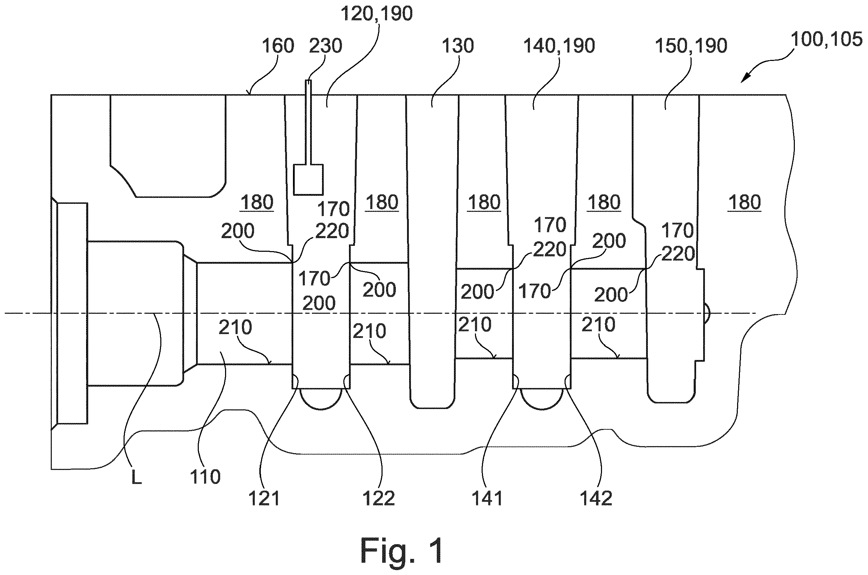

In der Figur 1 ist in einer Schnittdarstellung ein Grundkörper 100 von einem Ventilgehäuse 105 ausschnittsweise gezeigt. Der Grundkörper 100 bzw. das Ventilgehäuse 105 bildet einen Teil eines hydraulischen Steuerventils (nicht dargestellt) für ein Schaltgerät zum Beispiel von einem Automatikgetriebe eines Fahrzeugs, insbesondere eines Pkws.

Der in Fig. 1 gezeigte Grundkörper 100 ist aus Aluminiumguss gebildet und weist einen als Sacklochbohrung ausgebildeten Ventilkolbenraum 110, in dem in einer Kolbenrichtung und/oder Längsachse L axialbeweglich ein nicht gezeigter Ventilkolben gelagert wird, und mehrere Anschlüsse in Form von Ventiltaschen 120, 130, 140 und 150 auf. Die Bohrung bzw. der Ventilkolbenraum 110 erstreckt sich quer durch die Ventiltaschen 120, 130, 140 und 150 hindurch (bzw. die Ventiltaschen 120, 130, 140 und 150 erstrecken sich quer zum Ventilkolbenraum 110) und weist mehrere Abschnitte mit unterschiedlichen Durchmessern auf. Das Bezugszeichen 160 bezieht sich auf eine Flanschfläche auf einer Kopplungsseite zur Anbindung des Ventilgehäuses 100 z. B. an ein Steuergerät oder dergleichen. Die Seitenflächen der Ventiltaschen 120, 130, 140 und 150 sind, wie eingangs erläutert, als Schrägflächen ausgebildet. Zumindest einige der Umfangskanten zwischen dem Ventilkolbenraum 110 und den Ventiltaschen 120, 130, 140 und 150 fungieren als Steuerkanten 170. Um einige Steuerkanten 170 herum sind ferner Stirnflächen (Spiegel) 121, 131, 132, 151 und 152 in den Seitenflächen ausgebildet, die sich senkrecht zur Bohrungs- bzw. Längsachse L und/oder Kolbenrichtung des Ventilkolbenraums 110 erstrecken. Beim Gießen bzw. Druckgießen des Grundkörpers 100 werden die Ventiltaschen 120, 130, 140 und 150 im Wesentlichen fertig ausgeformt und der Ventilkolbenraum 110 vorgeformt.

Zwischen den Ventiltaschen 120, 130, 140 und 150 sowie randseitig zu der Ventiltasche 150 und 120 sind Stegabschnitte 180 aus dem Grundkörper 100 ausgeformt, wobei die Stegabschnitte die Ventiltaschen 120, 130, 140 und 150 seitlich und/oder in axialer Richtung begrenzen.

Die Stegabschnitte 180, welche zugleich Steuerkanten 170 tragen, begrenzen Ventiltaschen 120, 140 und 150, welche nachfolgend auch als Bearbeitungsventiltaschen 190 bezeichnet werden. Die Stegabschnitte 180, welche an die Bearbeitungsventiltaschen 190 angrenzen, weisen die Steuerkanten 170 auf, welches sich jeweils umlaufend um eine Stegausgangsöffnungen 200 erstrecken. Die Steuerkanten 170 werden jeweils durch einen Kolbenführungsabschnitt 210 und einen Stirnseitenabschnitt 220 gebildet. Die Stirnseitenabschnitte 220 erstrecken sich in einer Radialebene zu der Längsachse L und/oder der Kolbenrichtung. Die Kolbenführungsabschnitte 210 sind als Hohlzylinderabschnitte ausgebildet und bilden einen Teil des Ventilkolbenraums 110. Durch den Übergang von dem Kolbenführungsabschnitt 210 zu dem Stirnseitenabschnitt 220 an der Stegausgangsöffnung 200 wird jeweils die Steuerkante 170 gebildet.

Die Bearbeitung des Stirnseitenabschnitts 220 erfolgt durch ein Trennverfahren, wobei ein Trennwerkzeug 230 von einer Eingangsöffnung an der Flanschfläche 160 und/oder Kopplungsseite des Grundkörpers 100 zu der Bearbeitungsstelle zur Bearbeitung des Stirnseitenabschnitt 220 geführt wird. Das Trennwerkzeug 230 ist in der Figur 1 nur symbolisch dargestellt. Somit erfolgt die trennende Bearbeitung in Bezug auf die Längsachse L und/oder die Kolbenrichtung mit dem Trennwerkzeug 230, wobei das Trennwerkzeug 230 radial ausgerichtet ist. Insbesondere erfolgt der ab Betrag des Materials zur Fertigung des Stirnseitenabschnitts 220 von der Labyrinthseite aus. Dabei können die verschiedenen Stirnseitenabschnitte 220 nacheinander bearbeitet werden oder - wie dies nachfolgend noch erläutert wird - zumindest in einer gemeinsamen Bearbeitungsventiltasche 190 parallel bearbeitet werden.

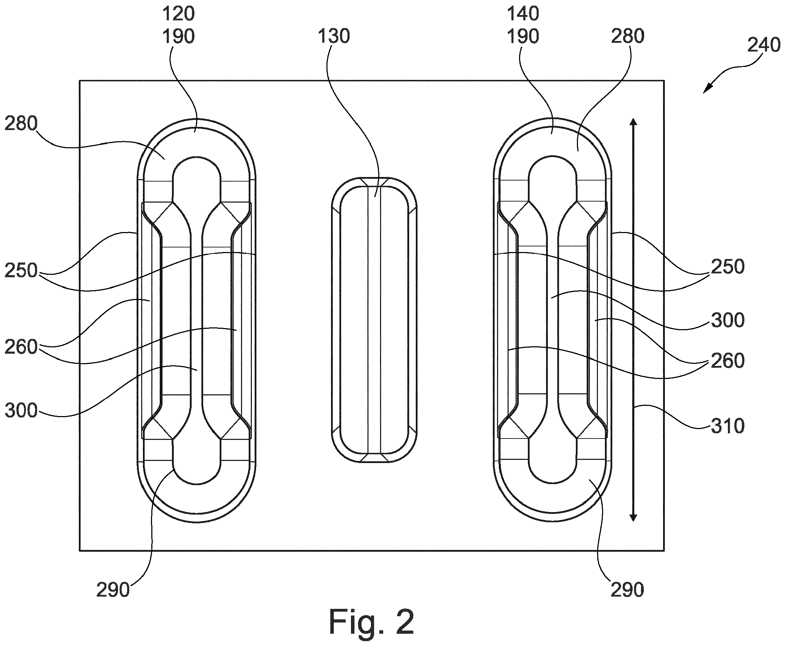

Die Figur 2 zeigt einen Rohgrundkörper 240 für den Grundkörper 100 von der Flanschfläche 160 und/oder von der Kopplungsseite in einem Ausschnitt. In der Draufsicht sind die bereits eingeformten Ventiltaschen 120, 130 und 140 zu erkennen.

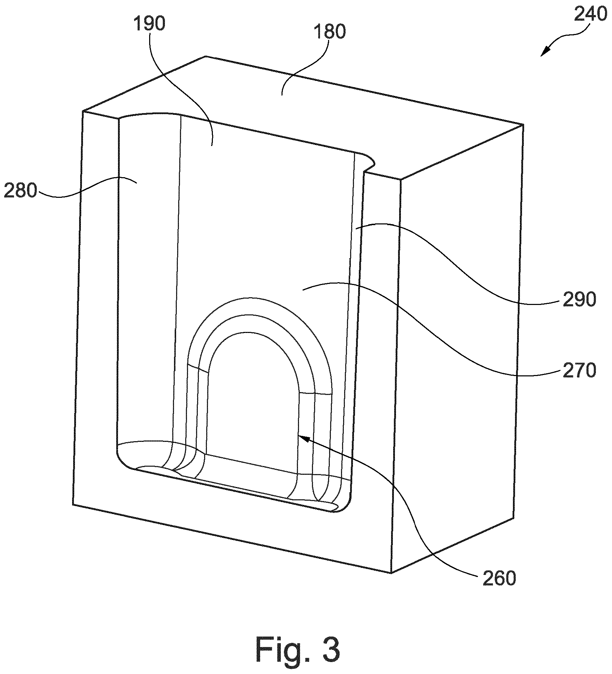

Die Figur 3 zeigt einen Detailausschnitt aus dem Rohgrundkörper 240 von einem der Bearbeitungsventiltaschen 190. Bei diesem Ausführungsbeispiel ist in dem Rohgrundkörper 240 noch kein Freiraum für den Ventilkolbenraum 110 eingeformt. Der angrenzende Stegwandabschnitt 180 stellt einen Stegwandbereich 250 bereit, wobei der Stegwandbereich 250 eine Seitenfläche in der Bearbeitungsventiltasche 190 bildet. Der Stegwandbereich weist einen Rohstirnseitenabschnitt 260 und einen Stegwandrestabschnitt 270 auf. Der Rohstirnseitenabschnitt 260 ist als eine Entformschräge z.B. mit einem Entformwinkel von z.B. 0°40' ausgebildet und ist somit in Richtung der Ausgangsöffnung von der Bearbeitungsventiltasche 190 angestellt. Der Rohstirnseitenabschnitt 260 weist eine Halbrundform auf, wobei das Halbrund in Richtung der Ausgangsöffnung der Bearbeitungsventiltasche 190 ausgerichtet ist und ein Abschluss an einem Boden der Bearbeitungsventiltasche 190 anschließt. Der Rohstirnseitenabschnitt 260 steht gegenüber dem Stegwandrestabschnitt 270 über.

Bei der trennenden Bearbeitung, während des Stirnseitenbearbeitungsschritts, wird der Rohstirnseitenabschnitt 260 bearbeitet, so dass die Stirnseitenabschnitt 220 mit den Stirnflächen 121, 122, 141, 142 gebildet werden.

Bei dem Ausführungsbeispiel in den Figuren 2 und 3 wird die trennende Bearbeitung durch ein Fräsverfahren umgesetzt, wobei ein Fräser als das Trennwerkzeug 230 von der Ausgangsöffnung der Bearbeitungsventiltasche 190 eingeführt wird. Um dem Bearbeitungsaufwand zu minimieren weist die Bearbeitungsventiltasche 190 einen Eingangsfreiraum 280 und einen Ausgangsfreiraum 290 auf, welche als in Längsrichtung der Bearbeitungsventiltasche 190 verlaufende, in Draufsicht teilkreisfömige Aussparungen ausgebildet sind, welche über einen Bearbeitungskanal miteinander verbunden sind, wobei der Bearbeitungskanal 300 durch zwischen den Stegwandbereichen 250 einer der Bearbeitungsventiltaschen 190 gebildet ist.

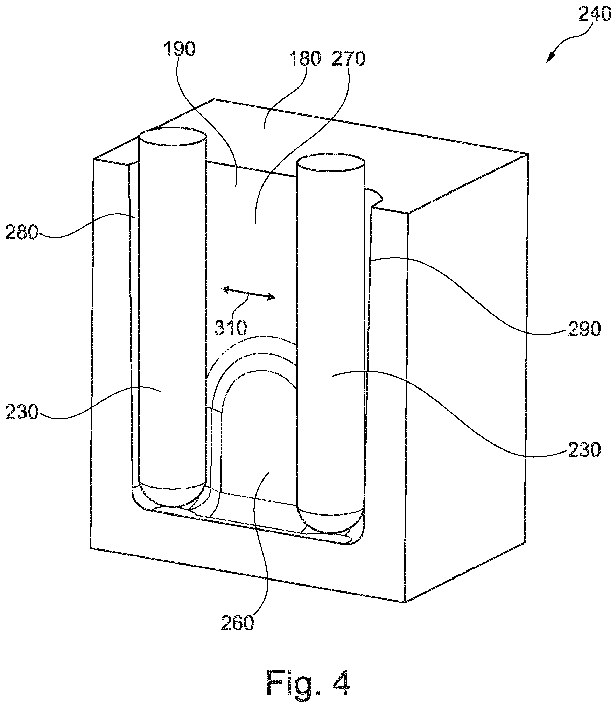

In der Figur 4 ist die gleiche Bearbeitungsventiltasche 190 gezeigt, wobei das Trennwerkzeug 230 als Fräser ausgebildet ist und zweifach, nämlich einmal in dem Eingangsfreiraum 280 und ein zweites Mal in dem Ausgangsfreiraum 290, dargestellt ist. Das trennende Verfahren wird durch eine Bewegung des Trennwerkzeugs 230 entlang des Pfeils 310, wie diese in der Figur 2 dargestellt ist, durchgeführt.

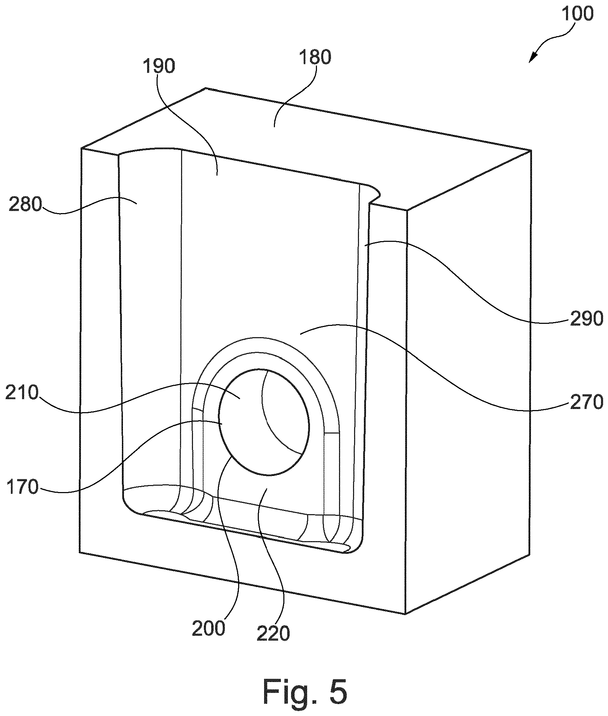

Die Figur 5 zeigt die gleiche Bearbeitungsventiltasche 190, jedoch in dem fertig bearbeiteten Grundkörper 100, wobei zudem der Ventilkolbenraum 110 eingebracht wurde. Es ist zu erkennen, dass durch die trennende Bearbeitung in dem Stirnseitenbearbeitungsschritt vorzugsweise ausschließlich Material an dem Rohstirnseitenabschnitt 260 abgetragen wurde, um den Stirnseitenabschnitt 220 zu bilden. Das Eindringen des Ventilkolbenraums 110 kann bei einer ersten Alternative vor dem Stirnseitenbearbeitungsschritt und bei einer zweiten Alternative nach dem Stirnseitenbearbeitungsschritt erfolgen.

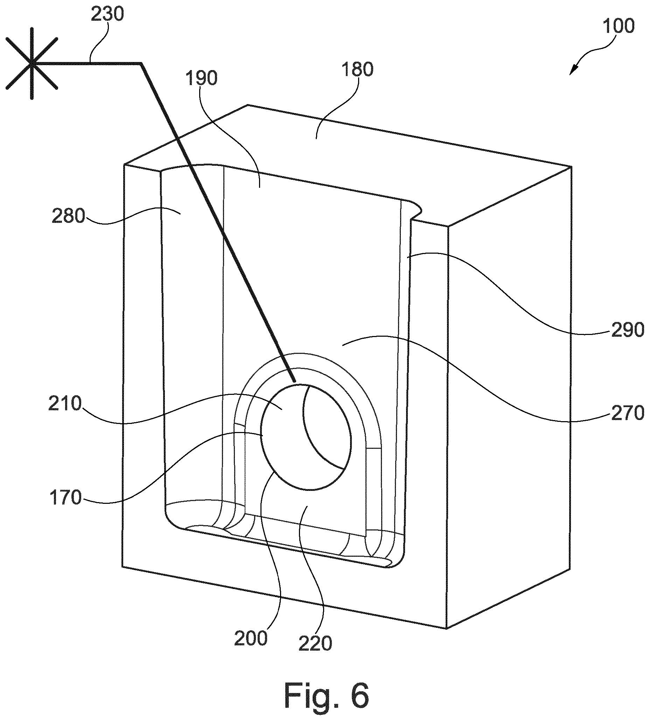

Die Figur 6 visualisiert eine alternative Verfahrensvariante, wobei statt dem Fräser als Trennwerkzeug 230 ein Laserstrahl für eine Lasermaterialbearbeitung verwendet wird. Der Laserstrahl als Trennwerkzeug 230 wird über die Ausgangsöffnung der Bearbeitungsventiltasche 190 zu dem Bearbeitungsort geführt, um ausgehend von dem Rohstirnseitenabschnitt 260 den Stirnseitenabschnitt 220 im Rahmen des Stirnseitenbearbeitungsschritts zu fertigen.

Bei anderen Ausführungsformen der Erfindung werden beide trennende Verfahren eingesetzt, so ist es möglich, dass zunächst über die Lasermaterialbearbeitung der Rohstirnseitenabschnitt 260 vor bearbeitet wird und nachfolgend über die Fräsbearbeitung zu dem Stirnseitenabschnitt 220 weiter- oder endbearbeitet wird.

### Bezugszeichen

- 100: Grundkörper von einem Ventilgehäuse
- 105: Ventilgehäuse
- 110: Ventilkolbenraum (Bohrung)
- 120: Ventiltasche
- 121: Stirnfläche (Spiegel)
- 122: Stirnfläche (Spiegel)
- 130: Ventiltasche
- 140: Ventiltasche
- 141: Stirnfläche (Spiegel)
- 142: Stirnfläche (Spiegel)
- 150: Ventiltasche
- 160: Flanschfläche
- 170: Steuerkanten
- 180: Stegabschnitte
- 190: Bearbeitungsventiltasche
- 200: Stegausgangsöffnung
- 210: Kolbenführungsabschnitt
- 220: Stirnseitenabschnitt
- 230: Trennwerkzeug
- 240: Rohgrundkörper
- 250: Stegwandbereich
- 260: Rohstirnseitenabschnitt
- 270: Stegwandrestabschnitt
- 280: Eingangsfreiraum
- 290: Ausgangsfreiraum
- 300: Bearbeitungskanal
- 310: Pfeil
- L: Längsachse

## Patentansprüche

1. Verfahren zur Fertigung eines Grundkörpers (100) eines Ventilgehäuses (105) für ein hydraulisches Steuerventil,
wobei der Grundkörper (100) aus Aluminiumguss gebildet ist, wobei in dem Grundkörper (100) von einer Kopplungsseite eine Mehrzahl von Ventiltaschen (120,130,140,150) zur Führung einer Hydraulikflüssigkeit eingebracht ist, wobei die Ventiltaschen beim Gießen des Grundkörpers ausgeformt werden, wobei die Ventiltaschen (120,130,140,150) durch Stegabschnitte (180) begrenzt und/oder voneinander getrennt sind, wobei in dem Grundkörper (100) ein Ventilkolbenraum (110) für einen Ventilkolben eingebracht ist, wobei der Ventilkolbenraum beim Gießen vorgeformt wird, wobei der Ventilkolbenraum (110) als Sacklochbohrung ausgebildet ist, wobei der Ventilkolbenraum (110) eine Längsachse (L) definiert, wobei der Ventilkolbenraum (110) mindestens einen Stegabschnitt (180) durchquert, so dass eine Stegausgangsöffnung (200) gebildet ist, wobei die Stegausgangsöffnung (200) in einer der Ventiltaschen (120,140) mündet, wobei die Ventiltasche (120,140) nachfolgend als Bearbeitungsventiltasche (190) bezeichnet ist, wobei die Stegausgangsöffnung (200) umlaufend durch eine Steuerkante (170) begrenzt ist, wobei die Steuerkante (170) durch einen Kolbenführungsabschnitt (210) und einen Stirnseitenabschnitt (220) gebildet ist,
wobei in einen Rohgrundkörper (240) für den Grundkörper (100) der Stirnseitenabschnitt (220) der Steuerkante (170) in einem Stirnseitenbearbeitungsschritt durch ein trennendes Verfahren gefertigt wird, wobei bei dem trennenden Verfahren das Trennwerkzeug (220) von der Kopplungsseite durch die Bearbeitungsventiltasche (190) zu dem Stirnseitenabschnitt (220) der Steuerkante (170) geführt wird und wobei das trennende Verfahren als ein Fräsverfahren ausgebildet ist, wobei das Fräswerkzeug von der Kopplungsseite durch die Bearbeitungsventiltasche (190) zu dem Stirnseitenabschnitt (220) der Steuerkante (170) geführt wird.

2. Verfahren nach Anspruch 1, **dadurch gekennzeichnet, dass** das trennende Verfahren als ein Lasertrennverfahren ausgebildet ist, wobei der Laserstrahl von der Kopplungsseite durch die Bearbeitungsventiltasche (190) zu dem Stirnseitenabschnitt (220) der Steuerkante (170) geführt wird.

3. Verfahren nach Anspruch 2, **gekennzeichnet durch** eine Verfahrensfolge, wobei eine Vorbearbeitung durch das Fräsverfahren und eine Endbearbeitung oder Nachbearbeitung durch das Lasertrennverfahren oder eine Vorbearbeitung durch das Lasertrennverfahren und eine Endbearbeitung oder Nachbearbeitung durch das Fräsverfahren durchgeführt wird.

4. Verfahren nach einem der vorhergehenden Ansprüche, **gekennzeichnet durch** einen Zylinderbearbeitungsschritt, wobei der Ventilkolbenraum (110) in den Rohgrundkörper (240) eingebracht und/oder bearbeitet wird und wobei der Zylinderbearbeitungsschritt vor oder nach dem Stirnseitenbearbeitungsschritt durchgeführt wird, um den Kolbenführungsabschnitt (210) der Steuerkante (170) zu fertigen.

5. Verfahren nach einem der vorhergehenden Ansprüche, **dadurch gekennzeichnet, dass** der Rohgrundkörper (240) in der Bearbeitungsventiltasche (190) einen Stegwandbereich (250) aufweist, wobei der Stegwandbereich (250) einen Rohstirnseitenabschnitt (260) und einen Stegwandrestabschnitt (270) aufweist, wobei der Rohstirnseitenabschnitt (260) in axialer Richtung in Bezug auf die Kolbenrichtung und/oder Längsache (L) über den Stegwandrestabschnitt (270) übersteht.

6. Verfahren nach einem der vorhergehenden Ansprüche, **dadurch gekennzeichnet, dass** der Rohgrundkörper (240) durch ein Urformverfahren gebildet wird.

7. Verfahren nach Anspruch 6, **dadurch gekennzeichnet, dass** der Rohstirnseitenabschnitt (260) als ein Entformungsschrägabschnitt ausgebildet ist.

8. Verfahren nach einem der vorhergehenden Ansprüche, **dadurch gekennzeichnet, dass** der Stirnseitenabschnitt (220) sich in einer Radialebene zu der Kolbenrichtung und/oder Längsachse (L) erstreckt.

9. Ventilgehäuse (105) für ein hydraulisches Steuerventil
mit einem Grundkörper (100),
wobei der Grundkörper (100) aus Aluminiumguss gebildet ist, wobei in dem Grundkörper (100) von einer Kopplungsseite eine Mehrzahl von Ventiltaschen (13,140,150) zur Führung einer Hydraulikflüssigkeit eingebracht ist, wobei die Ventiltaschen beim Gießen des Grundkörpers ausgeformt werden, wobei die Ventiltaschen (13,140,150) durch Stegabschnitte (180) begrenzt und/oder voneinander getrennt sind,
wobei in dem Grundkörper (100) ein Ventilkolbenraum (110) für einen Ventilkolben eingebracht ist, wobei der Ventilkolbenraum beim Gießen vorgeformt wird, wobei der Ventilkolbenraum (110) als Sacklochbohrung ausgebildet ist, wobei der Ventilkolbenraum (110) eine Längsachse (L) definiert, wobei der Ventilkolbenraum (110) mindestens einen Stegabschnitt (180) durchquert, so dass eine Stegausgangsöffnung (200) gebildet ist, wobei die Stegausgangsöffnung (200) in einer der Ventiltaschen (120,140) mündet, wobei die Ventiltasche (120,140) nachfolgend als Bearbeitungsventiltasche (190) bezeichnet ist, wobei die Stegausgangsöffnung (200) umlaufend durch eine Steuerkante (170) begrenzt ist, wobei die Steuerkante (170) durch einen Kolbenführungsabschnitt (210) und einen Stirnseitenabschnitt (220) gebildet ist, wobei der Stirnseitenabschnitt (220) der Steuerkante (170) des Grundkörpers (100) durch ein trennendes Verfahren gefertigt ist, wobei bei dem trennenden Verfahren das Trennwerkzeug von der Kopplungsseite durch die Bearbeitungsventiltasche (190) zu dem Stirnseitenabschnitt (220) der Steuerkante (170) geführt ist und wobei das trennende Verfahren als ein Fräsverfahren ausgebildet ist, wobei das Fräswerkzeug von der Kopplungsseite durch die Bearbeitungsventiltasche (190) zu dem Stirnseitenabschnitt (220) der Steuerkante (170) geführt ist.

10. Ventilgehäuse (105) nach Anspruch 9, **dadurch gekennzeichnet, dass** der Grundkörper (100) nach dem Verfahren nach einer der Ansprüche 1 bis 8 gefertigt ist.

## Claims

1. Method for manufacturing a main body (100) of a valve housing (105) for a hydraulic control valve,
wherein the main body (100) is formed from cast aluminium, wherein a plurality of valve pockets (120, 130, 140, 150) for conducting a hydraulic fluid is formed in the main body (100) from a coupling side, wherein the valve pockets are formed during the casting of the main body, wherein the valve pockets (120, 130, 140, 150) are delimited and/or separated from one another by web sections (180), wherein a valve-piston space (110) for a valve piston is formed in the main body (100), wherein the valve-piston space is pre-formed during the casting, wherein the valve-piston space (110) is in the form of a blind bore, wherein the valve-piston space (110) defines a longitudinal axis (L), wherein the valve-piston space (110) passes through at least one web section (180), so that a web-exit opening (200) is formed, wherein the web-exit opening (200) opens out into one of the valve pockets (120, 140), wherein the valve pocket (120, 140) is subsequently referred to as machining valve pocket (190), wherein the web-exit opening (200) is peripherally delimited by a control edge (170), wherein the control edge (170) is formed by a piston-guiding section (210) and an end-face section (220),
wherein, in a raw main body (240) for the main body (100), the end-face section (220) of the control edge (170) is made by a separating process in an end-face-machining step, wherein, during the separating process, the separating tool (230) is guided from the coupling side to the end-face section (220) of the control edge (170) through the machining valve pocket (190), and wherein the separating process is configured to be a milling process, wherein the milling tool is guided from the coupling side to the end-face section (220) of the control edge (170) through the machining valve pocket (190).

2. Method according to Claim 1, **characterized in that** the separating process is configured to be a laser separating process, wherein the laser beam is guided from the coupling side to the end-face section (220) of the control edge (170) through the machining valve pocket (190) .

3. Method according to Claim 2, **characterized by** a method sequence, wherein pre-machining by way of the milling process and final machining or post-machining by way of the laser separating process or pre-machining by way of the laser separating process and final machining or post-machining by way of the milling process are carried out.

4. Method according to one of the preceding claims, **characterized by** a cylinder machining step, wherein the valve-piston space (110) is formed and/or machined in the raw main body (240), and wherein the cylinder machining step is carried out before or after the end-face-machining step in order to make the piston-guiding section (210) of the control edge (170).

5. Method according to one of the preceding claims, **characterized in that** the raw main body (240) has a web-wall region (250) in the machining valve pocket (190), wherein the web-wall region (250) has a raw end-face section (260) and a web-wall remaining section (270), wherein the raw end-face section (260) projects beyond the web-wall remaining section (270) in an axial direction in relation to the piston direction and/or longitudinal axis (L).

6. Method according to one of the preceding claims, **characterized in that** the raw main body (240) is formed by a primary-forming process.

7. Method according to Claim 6, **characterized in that** the raw end-face section (260) is in the form of a demoulding oblique section.

8. Method according to one of the preceding claims, **characterized in that** the end-face section (220) extends in a radial plane in relation to the piston direction and/or longitudinal axis (L).

9. Valve housing (105) for a hydraulic control valve, having a main body (100),
wherein the main body (100) is formed from cast aluminium, wherein a plurality of valve pockets (120, 130, 140, 150) for conducting a hydraulic fluid is formed in the main body (100) from a coupling side, wherein the valve pockets are formed during the casting of the main body, wherein the valve pockets (120, 130, 140, 150) are delimited and/or separated from one another by web sections (180),
wherein a valve-piston space (110) for a valve piston is formed in the main body (100), wherein the valve-piston space is pre-formed during the casting, wherein the valve-piston space (110) is in the form of a blind bore, wherein the valve-piston space (110) defines a longitudinal axis (L), wherein the valve-piston space (110) passes through at least one web section (180), so that a web-exit opening (200) is formed, wherein the web-exit opening (200) opens out into one of the valve pockets (120, 140), wherein the valve pocket (120, 140) is subsequently referred to as machining valve pocket (190), wherein the web-exit opening (200) is peripherally delimited by a control edge (170), wherein the control edge (170) is formed by a piston-guiding section (210) and an end-face section (220),
wherein the end-face section (220) of the control edge (170) of the main body (100) is made by a separating process, wherein, during the separating process, the separating tool is guided from the coupling side to the end-face section (220) of the control edge (170) through the machining valve pocket (190), and wherein the separating process is configured to be a milling process, wherein the milling tool is guided from the coupling side to the end-face section (220) of the control edge (170) through the machining valve pocket (190).

10. Valve housing (105) according to Claim 9, **characterized in that** the main body (100) is manufactured according to the method according to one of Claims 1 to 8.

## Revendications

1. Procédé de fabrication d'un corps de base (100) d'un boîtier de soupape (105) destiné à une soupape de commande hydraulique, le corps de base (100) étant formé à partir d'une fonte d'aluminium, une pluralité de poches de soupape (120, 130, 140, 150) destinées à guider un fluide hydraulique étant ménagées dans le corps de base (100) depuis un côté d'accouplement, les poches de soupape étant formées lorsque le corps de base est coulé, les poches de soupape (120, 130, 140, 150) étant délimitées et/ou séparées les unes des autres par des portions de nervure (180), une chambre de piston de soupape (110) destinée à un piston de soupape étant ménagée dans le corps de base (100), la chambre de piston de soupape étant préformée pendant la coulée, la chambre de piston de soupape (110) étant réalisée sous la forme d'un trou borgne, la chambre de piston de soupape (110) définissant un axe longitudinal (L), la chambre de piston de soupape (110) traversant au moins une portion de nervure (180) de façon à former une ouverture de sortie de nervure (200), l'ouverture de sortie de nervure (200) débouchant dans l'une des poches de soupape (120, 140), la poche de soupape (120, 140) étant désignée ci-après par poche de soupape de traitement (190), l'ouverture de sortie de nervure (200) étant limitée périphériquement par un bord de commande (170), le bord de commande (170) étant formé par une portion de guidage de piston (210) et une portion de côté frontal (220),
la portion de côté frontal (220) du bord de commande (170) étant réalisé par un procédé de séparation dans un corps de base brut (240) destiné au corps de base (100) lors d'une étape de traitement de côté frontal, l'outil de séparation (230) étant guidé, dans le procédé de séparation, depuis le côté d'accouplement à travers la poche de soupape de traitement (190) jusqu'à la portion de côté frontal (220) du bord de commande (170) et le procédé de séparation étant conçu comme un procédé de fraisage, l'outil de fraisage étant guidé depuis le côté d'accouplement à travers la poche de soupape de traitement (190) jusqu'à la portion de côté frontal (220) du bord de commande (170).

2. Procédé selon la revendication 1, **caractérisé en ce que** le procédé de séparation est conçu comme un procédé de découpe au laser, le faisceau laser étant guidé depuis le côté d'accouplement à travers la poche de soupape de traitement (190) jusqu'à la portion de côté frontal (220) du bord de commande (170).

3. Procédé selon la revendication 2, **caractérisé par** une séquence de procédé, le prétraitement étant effectué par le procédé de fraisage et le traitement final ou le post-traitement étant effectué par le procédé de découpe au laser ou le prétraitement étant effectué par le procédé de découpe au laser et le traitement final ou le post-traitement étant effectué par le procédé de fraisage.

4. Procédé selon l'une des revendications précédentes, **caractérisé par** une étape de traitement de cylindre, la chambre de piston de soupape (110) étant ménagée et/ou traitée dans le corps de base brut (240) et l'étape de traitement de cylindre étant réalisée avant ou après l'étape de traitement de côté frontal pour réaliser la portion de guidage de piston (210) du bord de commande (170).

5. Procédé selon l'une des revendications précédentes, **caractérisé en ce que** le corps de base brut (240) comporte dans la poche de soupape de traitement (190) une zone de paroi de nervure (250), la zone de paroi de nervure (250) comportant une portion de côté frontal brute (260) et une portion de paroi de nervure restante (270), la portion de côté frontal brute (260) faisant saillie de la portion de paroi de nervure restante (270) dans la direction axiale par rapport à la direction de piston et/ou à l'axe longitudinal (L).

6. Procédé selon l'une des revendications précédentes, **caractérisé en ce que** le corps de base brut (240) est formé par un procédé de moulage primaire.

7. Procédé selon la revendication 6, **caractérisé en ce que** la portion de côté frontal brute (260) est conçue comme une portion de démoulage inclinée.

8. Procédé selon l'une des revendications précédentes, **caractérisé en ce que** la portion de côté frontal (220) s'étend dans un plan radial par rapport à la direction de piston et/ou à l'axe longitudinal (L).

9. Boîtier de soupape (105) destiné à une soupape de commande hydraulique,
ledit boîtier de soupape comprenant un corps de base (100),
le corps de base (100) étant formé à partir d'une fonte d'aluminium, une pluralité de poches de soupape (120, 130, 140, 150) destinées à guider un fluide hydraulique étant ménagées dans le corps de base (100) depuis un côté d'accouplement, les poches de soupape étant formées lorsque le corps de base est coulé, les poches de soupape (120, 130, 140, 150) étant délimitées et/ou séparées les unes des autres par des portions de nervure (180),
une chambre de piston de soupape (110) destinée à un piston de soupape étant ménagée dans le corps de base (100), la chambre de piston de soupape étant préformée pendant la coulée, la chambre de piston de soupape (110) étant réalisée sous la forme d'un trou borgne, la chambre de piston de soupape (110) définissant un axe longitudinal (L), la chambre de piston de soupape (110) traversant au moins une portion de nervure (180) de façon à former une ouverture de sortie de nervure (200), l'ouverture de sortie de nervure (200) débouchant dans l'une des poches de soupape (120, 140), la poche de soupape (120, 140) étant désignée ci-après par la poche de soupape de traitement (190), l'ouverture de sortie de nervure (200) étant limitée périphériquement par un bord de commande (170), le bord de commande (170) étant formé par une portion de guidage de piston (210) et une portion de côté frontal (220),
la portion de côté frontal (220) du bord de commande (170) du corps de base (100) étant réalisée par un procédé de séparation, l'outil de séparation étant guidé, dans le procédé de séparation, depuis le côté d'accouplement à travers la poche de soupape de traitement (190) jusqu'à la portion de côté frontal (220) du bord de commande (170) et le procédé de séparation étant conçu comme un procédé de fraisage, l'outil de fraisage étant guidé depuis le côté d'accouplement à travers la poche de soupape de traitement (190) jusqu'à la portion de côté frontal (220) du bord de commande (170).

10. Boîtier de soupape (105) selon la revendication 9, **caractérisé en ce que** le corps de base (100) est fabriqué par le procédé selon l'une des revendications 1 à 8.
